# EUROPÄISCHE PATENTSCHRIFT

(11) **EP 4 148 002 B1**
(45) Veröffentlichungstag und Bekanntmachung des Hinweises auf die Patenterteilung: **03.12.2025**
(21) Anmeldenummer: 22188482.8
(22) Anmeldetag: 03.08.2022
(51) Int. Cl.: B65G 1/04, B66F 9/075, B66F 9/14

(54) **FLURFÖRDERZEUG**
INDUSTRIAL TRUCK
CHARIOT DE MANUTENTION

(30) Priorität: 09.09.2021 DE 102021123318
(43) Veröffentlichungstag der Anmeldung: 15.03.2023
(73) Patentinhaber: STILL GmbH, 22113 Hamburg (DE)
(72) Erfinder: Claus, Alexander, 22303 Hamburg (DE); Hösle, Johann-Franz-Xaver, 87494 Rückholz (DE)
(74) Vertreter: Patentship Patentanwaltgesellschaft

(56) Entgegenhaltungen:
- US-A1- 2014 072 392

## Beschreibung

Die Erfindung betrifft ein Flurförderzeug mit einem Hubgerüst, einem Lastaufnahmemittel zur Aufnahme einer Last und einer Schubvorrichtung für das Lastaufnahmemittel, wobei die Schubvorrichtung gemeinsam mit dem Lastaufnahmemittel an dem Hubgerüst anhebbar und absenkbar ist und wobei die Schubvorrichtung ausgebildet ist, das Lastaufnahmemittel relativ zu dem Hubgerüst in horizontaler Fahrzeugquerrichtung des Flurförderzeugs zu verschieben, wobei eine Regelungsvorrichtung, insbesondere eine elektronische Regelungsvorrichtung, vorgesehen ist, die mit einer Sensoreinrichtung in Wirkverbindung steht.

Flurförderzeuge der genannten Art sind häufig als Schmalgangstapler in Form eines Hochregalstaplers oder Hochregalkommissionierers ausgeführt. Das in der Regel als Lastgabel ausgeführte Lastaufnahmemittel kann hierbei mittels einer Schubvorrichtung in Fahrzeugquerrichtung relativ zu dem Hubgerüst bewegt werden.

Derartige Flurförderzeuge werden in Schmalgang-Regalanlagen, beispielsweise Hochregalanlagen, für das Ein- und Auslagern von Paletten und Lasten in Regalfächern von Regalen der Regalanlage eingesetzt, die entsprechende Einlagerungsplätze bilden. Das Flurförderzeug bewegt sich im Betrieb längs einer Regalzeile in einem entsprechenden Regalgang der Regalanlage, beispielsweise einem Schmalgang. Zum Einlagern einer auf dem Lastaufnahmemittels des Flurförderzeugs befindlichen Palette mit einer darauf befindlichen Last wird mittels der Schubvorrichtung, beispielsweise einer Teleskopgabel oder einer Schwenkschubgabel, die Palette mit der darauf befindlichen Last in horizontaler Fahrzeugquerrichtung, d.h. quer zur Fahrtrichtung des Flurförderzeugs im Regalgang, und somit seitlich in den von dem Regalfach des Regals gebildeten Einlagerungsplatz ausgeschoben. Das Ausstapeln einer Palette mit einer darauf befindlichen Last erfolgt entsprechend, indem mittels der Schwenkschubgabel bzw. der Teleskopgabel eine Palette in Fahrzeugquerrichtung und somit seitlich aus dem Regalfach des Regals herausgezogen wird. Die Schubvorrichtung kann hierbei einen elektrischen oder einen hydraulischen Antrieb aufweisen, der die Bewegung des Lastaufnahmemittels relativ zu dem Hubgerüst in horizontaler Fahrzeugquerrichtung des Flurförderzeugs erzeugt.

Derartige Hochregalstapler oder Hochregalkommissionierer werden zum Einlagern von Lasten von 0 kg bis 1600 kg verwendet und sind mit Hubgerüsten versehen, die eine maximale Einlagerungshöhe der Lasten im Bereich von 7m bis 18m ermöglichen.

Beim Einlagern einer Last in einen Einlagerungsplatz, beispielsweise ein Regalfach des Regals, wird das Lastaufnahmemittel des Flurförderzeugs mit der darauf befindlichen Last gemeinsam mit der Schubvorrichtung mittels des Hubgerüsts angehoben und anschließend das Lastaufnahmemittel mittels der Schubvorrichtung in Fahrzeugquerrichtung ausgeschoben. In Abhängig von der Hubhöhe, dem Lastgewicht sowie dem Lastschwerpunkt der auf dem Lastaufnahmemittel befindlichen Last ergibt sich hierbei eine unterschiedliche seitliche Hubgerüstbiegung des Hubgerüstes.

Bei einer entsprechend hohen seitlichen Hubgerüstbiegung des Hubgerüstes ist es erforderlich, beim seitlichen Ausschieben der Last mittels der Schubvorrichtung den Ausschubprozess der Last mittels der Schubvorrichtung manuell entsprechend derart zu steuern bzw. bei einem assistierten automatischen Ausschubprozess den Ausschubprozess der Last manuell derart zu unterbrechen, dass eine gleichmäßige Einlagerungstiefe der Last in dem Einlagerungsplatz, beispielsweise einem Regelfach, erzielt wird. Geschieht dies nicht, könnte bei einer entsprechend hohen seitlichen Hubgerüstbiegung des Hubgerüstes eine einzulagernde Palette zu tief in das Regalfach eingeschoben und eingelagert werden und nicht auf beiden horizontalen Regaltraversen des Regals aufliegen und/oder Lasten auf dem dahinterstehenden Regal verschoben werden sowie beim anschließenden automatischen Aufnehmen der Last mit einem Flurförderzeug die Last nicht vollständig bis zu einem Gabelrücken von Gabelzinken des Lastaufnahmemittels des Flurförderzeugs wieder aus dem Regalfach aufgenommen werden.

Da eine zu tief in den Einlagerungsplatz, beispielsweise ein Regalfach, eingelagerte Palette beim Aufnehmen der Last nicht vollständig bis zu einem Gabelrücken von Gabelzinken des Lastaufnahmemittels des Flurförderzeugs aufgenommen werden kann, kann sogar eine Gefahrensituation dahingehend entstehen, dass gegebenenfalls der notwendige seitliche Sicherheitsabstand zwischen einer auf dem Flurförderzeug befindlichen Last und dem Regal bei der Fahrt des Flurförderzeugs in dem Schmalgang nicht eingehalten wird und es zu Berührungen zwischen Lasten im Regal und der sich bewegende Last auf dem Flurförderzeug kommen könnte.

Aus der US 2014/072392 A1 ist ein gattungsgemäßes Flurförderzug mit den Merkmalen des Oberbegriffs des Patentanspruchs 1 bekannt.

Der vorliegenden Erfindung liegt die Aufgabe zugrunde, ein Flurförderzeug der eingangs genannten Gattung zur Verfügung zu stellen, das hinsichtlich des Einlagerns von Lasten in einem Einlagerungsplatz verbessert ist.

Diese Aufgabe wird erfindungsgemäß dadurch gelöst, dass die Sensoreinrichtung ausgebildet ist, einen horizontalen Abstand in Fahrzeugquerrichtung von der Schubvorrichtung zu einem Bezugspunkt eines Einlagerungsplatzes zu messen, und die Regelungsvorrichtung die Schubvorrichtung in Abhängigkeit von dem mittels der Sensoreinrichtung erfassten Abstand derart ansteuert, dass beim Einlagern einer auf dem Lastaufnahmemittel befindlichen Last in den Einlagerungsplatz eine vorgegebene Einlagerungstiefe der Last in den Einlagerungsplatz erzielt wird. Mit der Erfindung wird es somit ermöglicht, dass unabhängig von der seitlichen Hubgerüstbiegung beim Einlagern einer Last in einen Einlagerungsplatz die Last von der Schubvorrichtung stets auf eine vorgegebene Einlagerungstiefe in den Einlagerungsplatz ausgeschoben und eingelagert wird, so dass eine gleichmäßige Einlagerungstiefe von Lasten in den Einlagerungsplätzen auf einfache Weise erzielt und sichergestellt werden kann.

Die Regelungsvorrichtung steuert gemäß einer bevorzugten Ausgestaltungsform der Erfindung die Schubvorrichtung derart an, dass die Bewegung des Lastaufnahmemittels bei Erreichen der vorgegebenen Einlagerungstiefe gestoppt wird. Dadurch wird auf einfache Weise sichergestellt, dass die Last auf die vorgegebene Einlagerungstiefe seitlich herausgeschoben wird und mit der vorgegebenen Einlagerungstiefe in den Einlagerungsplatz eingelagert wird, wodurch ein zu tiefes Einlagern einer Last in den Einlagerungsplatz sicher verhindert wird.

Gemäß einer vorteilhaften Ausführungsform der Erfindung ist der Bezugspunkt an einem mindestens ein Regalfach als Einlagerungsplatz aufweisenden Regal, insbesondere an einer horizontalen Regaltraverse des Regals und/oder an einem vertikalen Ständer des Regals, ausgebildet, wobei die Regelungsvorrichtung die Schubvorrichtung in Abhängigkeit von dem mittels der Sensoreinrichtung erfassten Abstand derart ansteuert, dass beim Einlagern einer auf dem Lastaufnahmemittel befindlichen Last in das Regalfach des Regals eine vorgegebene Einlagerungstiefe der Last in das Regalfach erzielt wird. Der Bezugspunkt ist vorteilhafterweise von einer horizontalen Regaltraverse des Regals und/oder von einem vertikalen Ständer des Regals gebildet. Von der Sensoreinrichtung wird hierbei bevorzugt der Abstand der Schubvorrichtung zu der horizontalen Regaltraverse und/oder zu dem vertikalen Ständer des Regals gemessen. Hierdurch wird es ermöglicht, dass unabhängig von der seitlichen Hubgerüstbiegung beim Einlagern einer Last in ein Regalfach die Last von der Schubvorrichtung stets auf eine vorgegebene Einlagerungstiefe in das Regalfach ausgeschoben wird, so dass eine gleichmäßige Einlagerungstiefe von Lasten in Regelfächer auf einfache Weise erzielt und sichergestellt werden kann. Die vorgegebene Einlagerungstiefe der Last in das Regalfach ist hierbei bevorzugt derart definiert, dass die Last auf beiden horizontalen Regaltraversen des Regals abgesetzt werden kann ohne in einen Regalgang herauszuragen.

Gemäß einer alternativen und ebenfalls vorteilhaften Ausführungsform der Erfindung ist der Bezugspunkt an einer als Einlagerungsplatz ausgebildeten Übergabestation, insbesondere einer stationären Übergabestation oder einer Rollenbahn, ausgebildet. Somit kann unabhängig von der seitlichen Hubgerüstbiegung beim Einlagern und Absetzen einer Last auf eine Übergabestation die Last von der Schubvorrichtung stets auf eine vorgegebene Einlagerungstiefe in die Übergabestation ausgeschoben und abgesetzt werden.

Gemäß einer vorteilhaften Ausführungsform der Erfindung weist das Lastaufnahmemittel einen Gabelträger auf, an dem mindestens eine Gabelzinke einer Lastgabel angeordnet ist.

Die Sensoreinrichtung ist bei einem derartigen, einen Gabelträger aufweisenden Lastaufnahmemittel bevorzugt ausgebildet, den Abstand des Gabelträgers zu dem Bezugspunkt des Einlagerungsplatzes zu messen. Da eine Last bei der Aufnahme auf dem Lastaufnahmemittel bis zu dem Gabelrücken von Gabelzinken, die an dem Gabelträger angeordnet sind, aufzunehmen ist, kann der Gabelträger in einfacher Weise als Referenzpunkt für die Messung des Abstand des Lastaufnahmemittels zu dem Bezugspunkt des Einlagerungsplatzes gewählt werden, um die Last mit der vorgegebene Einlagerungstiefe in den Einlagerungsplatz einzulagern.

Gemäß einer alternativen und ebenfalls vorteilhaften Ausführungsform der Erfindung weist das Lastaufnahmemittel eine Teleskopgabel mit einem Teleskopgabeltisch auf, an dem mindestens eine Teleskopzinke angeordnet ist.

Die Sensoreinrichtung ist bei einem derartigen, einen Teleskopgabeltisch aufweisenden Lastaufnahmemittel bevorzugt ausgebildet, den Abstand des Teleskopgabeltisches zu dem Bezugspunkt des Einlagerungsplatzes zu messen.

Die Sensoreinrichtung kann als optisches Sensorsystem, insbesondere Lasersensor oder Kamera, oder als akustisches Sensorsystem ausgebildet sein.

Die Erfindung betrifft weiterhin ein System umfassend ein erfindungsgemäßes Flurförderzeug und mindestens einen Einlagerungsplatz, insbesondere eine Übergabestation, bevorzugt eine stationäre Übergabestation, oder ein Regal, das horizontale Regaltraversen und vertikale Ständer aufweist.

Die Erfindung betrifft weiterhin ein Verfahren zum Einlagern einer Last in einen Einlagerungsplatz mit einem Flurförderzeug, wobei das Flurförderzeug mit einem Hubgerüst, einem Lastaufnahmemittel zur Aufnahme einer Last und einer Schubvorrichtung für das Lastaufnahmemittel versehen ist, wobei die Schubvorrichtung gemeinsam mit dem Lastaufnahmemittel an dem Hubgerüst anhebbar und absenkbar ist und das Lastaufnahmemittel mittels der Schubvorrichtung zum Einlagern der Last in den Einlagerungsplatz relativ zu dem Hubgerüst in horizontaler Fahrzeugquerrichtung des Flurförderzeugs verschoben wird. Die oben genannte Aufgabe wird erfindungsgemäß dadurch gelöst, dass mit einer Sensoreinrichtung ein horizontaler Abstand in Fahrzeugquerrichtung von der Schubvorrichtung zu einem Bezugspunkt des Einlagerungsplatzes gemessen wird und die Schubvorrichtung in Abhängigkeit von dem mittels der Sensoreinrichtung erfassten Abstand derart angesteuert wird, dass beim Einlagern einer auf dem Lastaufnahmemittel befindlichen Last in den Einlagerungsplatz eine vorgegebene Einlagerungstiefe der Last in den Einlagerungsplatz erzielt wird. Mit einem derartigen Verfahren kann in einfacher Weise unabhängig von der seitlichen Hubgerüstbiegung beim Einlagern einer Last in einen Einlagerungsplatz die Last von der Schubvorrichtung stets auf eine vorgegebene Einlagerungstiefe in den Einlagerungsplatz ausgeschoben und eingelagert werden, so dass eine gleichmäßige Einlagerungstiefe von Lasten in den Einlagerungsplätze auf einfache Weise erzielt und sichergestellt werden kann.

Gemäß einer vorteilhaften Ausführungsform der Erfindung wird als Bezugspunkt des Einlagerungsplatzes ein Bezugspunkt an einem mindestens ein Regalfach als Einlagerungsplatz aufweisenden Regal, insbesondere an einer horizontalen Regaltraverse des Regals und/oder an einem vertikalen Ständer des Regals, verwendet, und wird die Schubvorrichtung in Abhängigkeit von dem mittels der Sensoreinrichtung erfassten Abstand derart angesteuert, dass beim Einlagern einer auf dem Lastaufnahmemittel befindlichen Last in das Regalfach des Regals eine vorgegebene Einlagerungstiefe der Last in das Regalfach erzielt wird. Hierdurch kann unabhängig von der seitlichen Hubgerüstbiegung beim Einlagern einer Last in ein Regalfach die Last von der Schubvorrichtung stets auf eine vorgegebene Einlagerungstiefe in das Regalfach ausgeschoben werden, so dass eine gleichmäßige Einlagerungstiefe von Lasten in Regelfächer auf einfache Weise erzielt und sichergestellt werden kann.

Gemäß einer alternativen und ebenfalls vorteilhaften Ausführungsform der Erfindung wird als Bezugspunkt des Einlagerungsplatzes ein Bezugspunkt an einer als Einlagerungsplatz ausgebildeten Übergabestation, insbesondere einer stationären Übergabestation oder einer Rollenbahn, verwendet. Somit kann unabhängig von der seitlichen Hubgerüstbiegung beim Einlagern und Absetzen einer Last auf eine Übergabestation die Last von der Schubvorrichtung stets auf eine vorgegebene Einlagerungstiefe in die Übergabestation ausgeschoben und abgesetzt werden.

Sofern gemäß einer vorteilhaften Ausgestaltungsform der Erfindung die Schubvorrichtung einen Gabelträger umfasst, an dem mindestens eine Gabelzinke einer Lastgabel angeordnet ist, wird von der Sensoreinrichtung der Abstand des Gabelträgers zu dem Bezugspunkt des Einlagerungsplatzes gemessen. Dadurch kann in einfacher Weise eine vorgegebene Einlagerungstiefe der Lasten in entsprechenden Einlagerungsplätzen, beispielsweise Regalfächern, erzielt werden und somit eine gleichmäßige Einlagerungstiefe von Lasten in Einlagerungsplätzen, beispielsweise Regelfächer, auf einfache Weise sichergestellt werden.

Sofern gemäß einer alternativen und ebenfalls vorteilhaften Ausgestaltungsform der Erfindung die Schubvorrichtung eine Teleskopgabel mit einem Teleskopgabeltisch umfasst, an dem mindestens eine Teleskopzinke angeordnet ist, wird von der Sensoreinrichtung der Abstand des Teleskopgabeltisches zu dem Bezugspunkt des Einlagerungsplatzes gemessen. Hierdurch kann ebenfalls in einfacher Weise eine vorgegebene Einlagerungstiefe der Lasten in entsprechenden Einlagerungsplätzen, beispielsweise Regalfächern, erzielt werden und somit eine gleichmäßige Einlagerungstiefe von Lasten in Einlagerungsplätzen, beispielsweise Regelfächer, auf einfache Weise sichergestellt werden.

Die Erfindung weist eine Reihe von Vorteilen auf.

Durch die vorgegebene und somit gleichmäßige Einlagerungstiefe von Lasten in Einlagerungsplätzen, beispielsweise Regalfächern eines Regals, wird vermieden, dass eingelagerte Lasten seitlich aus dem Regal in den Regalgang herausstehen und den seitlichen Sicherheitsabstand im Regalgang reduzieren.

Zudem ist kein zusätzliches Absetzen und Wiederaufnehmen von zu tief eingelagerten Lasten beim Auslagern aus dem Einlagerungsplatz, beispielsweise einem Regalfach, erforderlich, um die Lasten bis ganz an den Gabelrücken aufzunehmen, wodurch eine Zeitersparnis entsteht, die zu einer Erhöhung der Umschlagsleitung des Flurförderzeugs führt.

Bei Nutzung eines assistierten automatischen Ausschubprozesses, bei dem auf eine manuelle Eingabe hin, das Lastaufnahmemittel der Last automatisch in den Einlagerungsplatz, beispielsweise ein Regalfach, ausgeschoben wird, dort abgesenkt und die Last in den Einlagerungsplatz abgesetzt wird und gegebenenfalls anschließend das Lastaufnahmemittel wieder eingeschoben wird, ist kein manuelles Unterbrechen des Ausschubprozesses der Last und/oder keine manuelle Korrektur des Ausschubprozesses der Last erforderlich, wodurch eine Zeitersparnis und ein Komfortgewinn für die Bedienperson des Flurförderzeugs erzielt wird.

Zudem führt die Erfindung zu einem Sicherheitsgewinn, da eine Kollision mit in den seitlichen Sicherheitsabstand aus den Einlagerungsplätzen, beispielsweise Regalfächern, herausstehenden Lasten vermieden wird, da mit der vorgegebenen, einheitlichen Einlagerungstiefe der Lasten in den Einlagerungsplätzen, beispielsweise Regalfächern eine Regals, keine Lasten mehr in den seitlichen Sicherheitsabstand hineinragen.

Weiterhin wird mit der Erfindung beim Einlagern von Lasten in ein Regalfach ein Anstoßen und/oder Verrücken von Lasten im dahinterliegenden Regal vermieden.

Mit der vorgegebene Einlagerungstiefe der Last in den Einlagerungsplatz, beispielsweise ein Regalfach, ist die Ausschubtiefe und somit der Ausschubweg, um den die Schubvorrichtung die Last in Fahrzeugquerrichtung ausschiebt, festgesetzt. Dies erhöht die Sicherheit und reduziert Schäden an der Last, an den Regalen und den Flurförderzeugen.

Weiterhin wird mit der Sensoreinrichtung der Abstand der Schubvorrichtung, beispielsweise des Gabelträgers zu einem Bezugspunkt des Einlagerungsplatzes, beispielsweise einer horizontalen Regaltraverse und/oder einem vertikalen Ständer eines Regals vermessen, wodurch eine hohe Genauigkeit in der Ermittlung des Abstandes zum Einlagerungsplatz erzielt wird, da eine reale Situation vermessen wird.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer Seitenansicht,
- Figur 2: das Flurförderzeug der Figur 1 in einer perspektivischen Darstellung mit nach oben ausgefahrenem Hubgerüst,
- Figur 3: einen Ausschnitt der Figur 2 in einer vergrößerten Darstellung und
- Figur 4: eine Draufsicht auf ein Regal mit einem in einem Regalgang befindlichen erfindungsgemäßen Flurförderzeug,
- Figur 5: eine Seitenansicht eines Regals mit nach einem erfindungsgemäßen Verfahren eingestapelten Lasten,
- Figur 6: eine Draufsicht auf ein Regal mit einem in einem Regalgang befindlichen erfindungsgemäßen Flurförderzeug mit aufgenommener Last,
- Figur 7: eine Seitenansicht eines Regals mit nach dem Stand der Technik eingestapelten Lasten und
- Figur 8: eine Draufsicht auf ein Regal mit einem in einem Regalgang befindlichen Flurförderzeug des Standes der Technik mit aufgenommener Last.

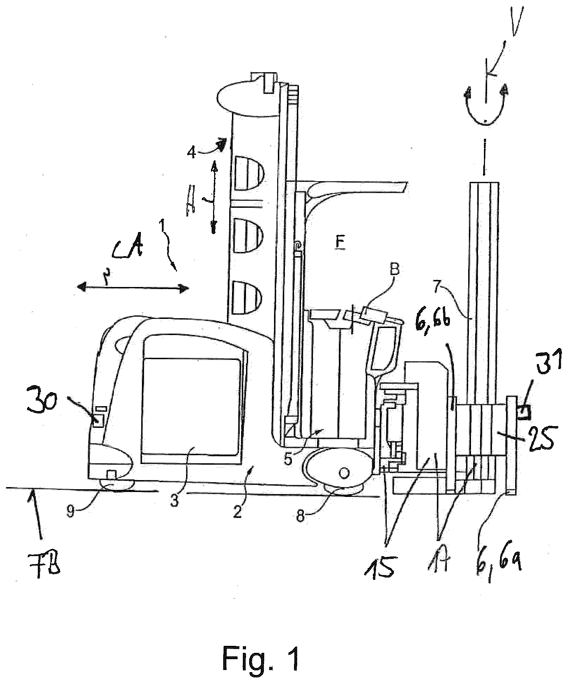

In den Figuren 1 bis 3 ist ein erfindungsgemäßes, als Schmalgangstapler in Form eines Hochregal-Kommissionierstaplers ausgebildetes Flurförderzeugs 1 dargestellt.

Das Flurförderzeug 1 weist einen Fahrzeugkörper mit einem Fahrzeugrahmen 2 auf, in dem ein Batteriefach zur Aufnahme einer beispielsweise als Antriebsbatterie ausgebildeten Energieversorgungseinheit 3 eines batterie-elektrischen Antriebssystems des Flurförderzeugs ausgebildet ist. Das Flurförderzeug 1 weist ein von einem Hubgerüst 4 gebildetes Hubwerk auf, an dem ein als Fahrkorb bzw. Fahrerkabine ausgebildeter Fahrerstand 5, der einen Fahrerarbeitsplatz F für eine Bedienperson bildet, mittels eines nicht näher dargestellten Hubantriebs auf- und abbewegbar angeordnet ist. Die mittels des Hubgerüsts 4 erzeugbare Hubbewegung ist mit einem Pfeil H verdeutlicht.

Das Flurförderzeug 1 stützt sich mittels zwei nicht-gelenkten und nicht angetriebenen Lasträdern 8, die an einem lastteilseitigen Ende des Fahrzeugrahmens 2 angeordnet ist, und einem lenkbaren Antriebsrad 9, das an einem antriebsteilseitigen Ende des Fahrzeugrahmens 2 angeordnet ist, auf einer Fahrbahn FB ab.

An dem Hubgerüst 4, beispielsweise an dem anhebbaren und absenkbaren Fahrerstand 5, ist eine Schubvorrichtung 15 mit einem Lastaufnahmemittel 6 befestigt, mit dem eine Last aufgenommen werden kann. Das Lastaufnahmemittel 6 ist mittels der Schubvorrichtung 15 relativ zu dem Hubgerüst 4 in horizontaler Fahrzeugquerrichtung Q bewegbar. Die Schubvorrichtung 15 ist gemeinsam mit dem Lastaufnahmemittel 6 an dem Hubgerüst 4 anhebbar und absenkbar.

Die Schubvorrichtung 15 umfasst einen elektrischen oder hydraulischen Antrieb, mit dem das Lastaufnahmemittel 6 in Fahrzeugquerrichtung Q des Flurförderzeugs 1 horizontal verschoben werden kann. Im dargestellten Ausführungsbeispiel umfasst die Schubvorrichtung 15 weiterhin eine Schwenkvorrichtung 17, mit der das Lastaufnahmemittel 6 um eine vertikale Achse V verschwenkt werden kann. An die Schwenkvorrichtung 17 ist im dargestellten Ausführungsbeispiel wiederum eine Zusatzhubvorrichtung 7 gekoppelt, mit der das Lastaufnahmemittel 6 relativ zu dem Fahrerstand 5 und relativ zu dem Hubgerüst 4 angehoben bzw. abgesenkt werden kann.

Die Schubvorrichtung 15 ist somit im dargestellten Ausführungsbeispiel als Schwenkschubgabel ausgebildet, mit der als Bewegung des Lastaufnahmemittels 6 eine horizontale Schubbewegung in Fahrzeugquerrichtung Q und eine Schwenkbewegung um die vertikale Achse V erzeugbar ist. Alternativ kann die Schubvorrichtung 15 von einer in Fahrzeugquerrichtung Q verschiebbar angeordneten Teleskopgabel gebildet werden, mit der als Bewegung des Lastaufnahmemittels 6 nur eine horizontale Schubbewegung in Fahrzeugquerrichtung Q erzeugbar ist.

In dem Fahrerstand 5 sind die für die Bedienung des Kommissionierflurförderzeugs 1 erforderlichen Steuer- und Bedienelemente angeordnet, beispielsweise in Form einer als Bedienpult B ausgebildeten Bedieneinrichtung. Das Bedienpult B ist zur Steuerung zur Steuerung des Fahrantriebs und der Lasthandhabungsfunktionen des Kommissionierflurförderzeugs 1 mit entsprechende Bedienelementen sowie einem Lenkbetätigungselement zur Steuerung einer Lenkung versehen.

Im antriebsteilseitigen Ende des Fahrzeugrahmens 2 ist weiterhin ein nicht näher dargestelltes elektrisches Antriebssystem angeordnet, das einen elektrischen Fahrmotor und einen Lenkantrieb, beispielsweise einen elektrischen Lenkmotor, für das lenkbare Antriebsrad 9 sowie ein elektrisch betriebenes Hydraulikpumpenaggregat umfasst, das zur Versorgung der Arbeitshydraulik vorgesehen ist, die von dem Hubantrieb des Hubwerkes 4 sowie einem Hubantrieb des Zusatzhubvorrichtung 7 sowie hydraulischen Antrieben für die im dargestellten Ausführungsbeispiel vorgesehene Schwenkschubgabel als Lastaufnahmemittel 6 gebildet sind.

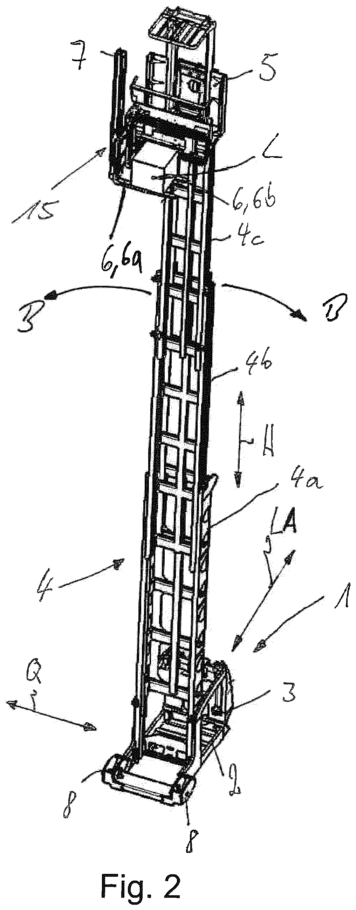

Das Hubgerüst 4 des erfindungsgemäßen Flurförderzeugs 1 ist als mehrschüssiges Hubgerüst ausgebildet. Im dargestellten Ausführungsbeispiel und gemäß der Figur 2 ist das Hubgerüst 4 als sogenanntes Triplex-Hubgerüst ausgeführt mit einem an dem Fahrzeugrahmen 2 angeordneten Standmast 4a, einem in dem Standmast 4a nach oben ausfahrbaren ersten Ausfahrmast 4b und einem in ersten Ausfahrmast 4b nach oben ausfahrbaren zweiten Ausfahrmast 4c, an dem die Schubvorrichtung 15 mit dem Lastaufnahmemittel 6 angeordnet ist. In der Figur 2 ist das Flurförderzeug 1 mit vollständig nach oben ausgezogenem Hubgerüst 4 dargestellt. Auf dem Lastaufnahmemittel 6 befindet sich eine Palette mit einer Last L. In der Figur 2 ist die Schubvorrichtung 15 derart angeordnet, dass sich die Last L mittig zur Fahrzeuglängsachse LA befindet. In dieser Stellung kann mit dem Flurförderzeug 1 in einem Regalgang eines Regals gefahren werden und die Last L transportiert werden.

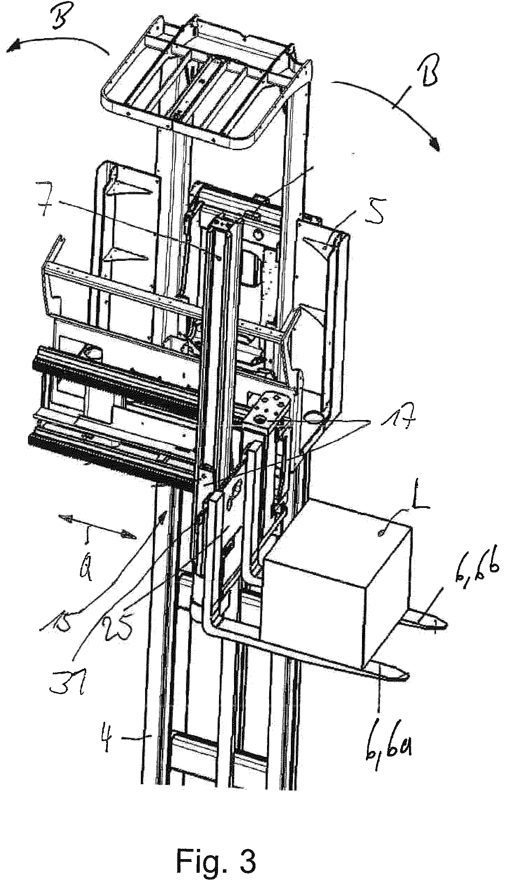

Zum Einstapeln der Last L in einen - in den Figuren 1 bis 3 nicht näher dargestellten Einlagerungsplatz, beispielsweise ein Regalfach eines Regals, wird die Last L mittels der Schubvorrichtung 15 in horizontaler Fahrzeugquerrichtung Q seitlich ausgeschoben. In der Figur 3 ist die Schubvorrichtung 15 in einer Position dargestellt, in der sich die Last L in einer in den Einlagerungsplatz, beispielsweise ein Regalfach eines Regals, seitlich ausgeschobenen Position befindet.

Die Schubvorrichtung 15 umfasst bei dem erfindungsgemäßen Flurförderzeug einen Gabelträger 25, an dem das Lastaufnahmemittel 6 angeordnet ist, das bevorzugt zwei Gabelzinken 6a, 6b einer Lastgabel umfasst.

Abhängig von der Hubhöhe, dem Lastgewicht sowie dem Lastschwerpunkt der auf dem Lastaufnahmemittel 6 befindlichen Last L tritt bei dem Flurförderzeug 1 eine unterschiedliche seitliche Hubgerüstbiegung des Hubgerüstes 4 auf, die in der Figuren 2 und 3 mit den Pfeilen B verdeutlicht ist.

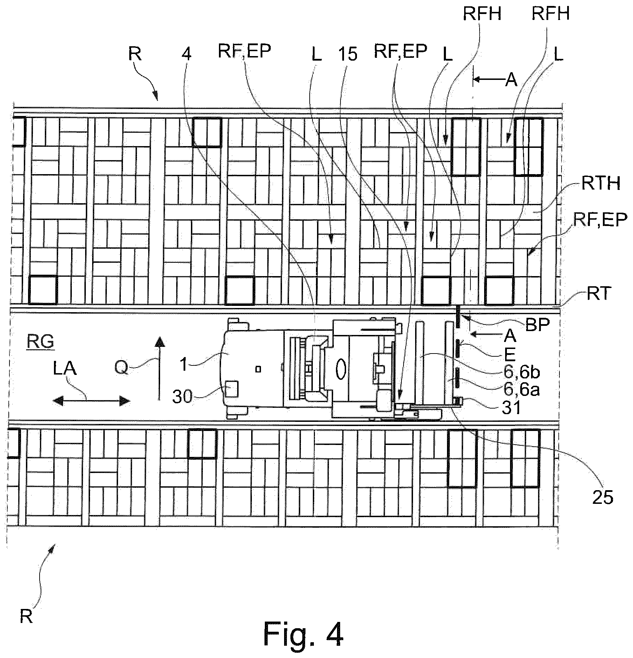

Um trotz dieser möglichen seitlichen Hubgerüstbiegung des Hubgerüstes 4 eine gleichmäßige und einheitliche Einlagerungstiefe der Lasten L in Einlagerungsplätzen, beispielsweise Regalfächern eines Regals, zu erzielen, ist erfindungsgemäß das Flurförderzeug 1 mit einer Regelungsvorrichtung 30, beispielsweise einer elektronischen Regelungsvorrichtung 30, versehen, die mit einer Sensoreinrichtung 31 in Wirkverbindung steht, mit der - wie in der Figur 4 verdeutlicht ist - ein Abstand der Schubvorrichtung 15 zu einem Bezugspunkt BP des Einlagerungsplatzes EP messbar ist. Die Sensoreinrichtung 31 misst hierbei den horizontalen Abstand in Fahrzeugquerrichtung Q von der Schubvorrichtung 15 zu dem Bezugspunkt BP des Einlagerungsplatzes EP. Die Regelungsvorrichtung 30 steuert hierbei die Schubvorrichtung 15, beispielweise den Antrieb der Schubvorrichtung 15, in Abhängigkeit von dem mittels der Sensoreinrichtung 31 erfassten Abstand derart an, dass beim Einlagern einer auf dem Lastaufnahmemittel 6 befindlichen Last L in den Einlagerungsplatz EP eine vorgegebene Einlagerungstiefe der Last L in den Einlagerungsplatz EP erzielt wird und somit die Last L mit der vorgegebenen Einlagerungstiefe in den Einlagerungsplatz EP ausgeschoben wird.

Bei der beispielhaften Ausführung des Einlagerungsplatzes EP als Regalfach RF eines Regals R, ist der Bezugspunkt BP an dem Regal R ausgebildet, beispielsweise an einer horizontalen Regaltraverse RT oder einem vertikalen Ständer des Regals R. Bevorzugt ist der Bezugspunkt BP an der dem Flurförderzeug 1 zugewandten vorderen Regaltraverse RT des Regals R ausgebildet. Die Sensoreinrichtung 31 misst hierbei bevorzugt den horizontalen Abstand in Fahrzeugquerrichtung Q von der Schubvorrichtung 15 zu der horizontalen Regaltraverse RT. Die Regelungsvorrichtung 30 steuert hierbei die Schubvorrichtung 15, beispielweise den Antrieb der Schubvorrichtung 15, in Abhängigkeit von dem mittels der Sensoreinrichtung 31 erfassten Abstand derart an, dass beim Einlagern einer auf dem Lastaufnahmemittel 6 befindlichen Last L in ein Regalfach RF des Regals R eine vorgegebene Einlagerungstiefe der Last L in das Regalfach RF erzielt wird und somit die Last L mit der vorgegebenen Einlagerungstiefe in das Regalfach RF ausgeschoben wird.

Die Regelungsvorrichtung 30 steuert hierzu die Schubvorrichtung 15, beispielweise den Antrieb der Schubvorrichtung 15, bevorzugt derart in Abhängigkeit von dem mittels der Sensoreinrichtung 31 erfassten Abstand an, dass die Bewegung des Lastaufnahmemittels 6 in Fahrzeugquerrichtung Q bei Erreichen der vorgegebenen Einlagerungstiefe gestoppt wird.

Bevorzugt ist die Sensoreinrichtung 31 derart ausgebildet, dass der Abstand des Gabelträgers 25 zu dem Bezugspunkt BP gemessen wird, der bevorzugt an der horizontalen Regaltraverse RT des Regals R vorgesehen ist. Die Sensoreinrichtung 31 kann hierzu direkt an dem Gabelträger 25 angeordnet sein und einen Erfassungsbereich E aufweisen, der seitlich in horizontaler Fahrzeugquerrichtung Q und somit in Bewegungsrichtung der Schubvorrichtung 15 ausgerichtet ist. Die Sensoreinrichtung 31 ist bevorzugt als Lasersensor, beispielsweise als Lasermessinstrument, ausgebildet.

In der Figur 4 ist hierbei eine Draufsicht auf ein Regal R mit einem in einem Regalgang RG befindlichen erfindungsgemäßen Flurförderzeug 1 dargestellt. Mit der Sensoreinrichtung 31 wird beim Einlagern einer Last L in ein als Regalfach RF des Regals R ausgebildeten Einlagerungsplatz EP der horizontale Abstand des Gabelträgers 25 zur vorderen, dem Flurförderzeug 1 zugewandten horizontalen Regaltraverse RT des Regalfachs RF gemessen, die den Bezugspunkt BP des als Regalfach RF ausgebildeten Einlagerungsplatzes EP bildet, und der die Ausschubbewegung des Lastaufnahmemittels 6 in horizontaler Fahrzeugquerrichtung Q erzeugende Antrieb der Schubvorrichtung 15 in Abhängigkeit von dem mittels der Sensoreinrichtung 31 erfassten Abstand derart angesteuert, dass beim Einlagern der auf dem Lastaufnahmemittel 6 befindlichen Last L in das Regalfach RF des Regals R eine vorgegebene Einlagerungstiefe der Last L in das Regalfach RF erzielt wird. Die vorgegeben Einlagerungstiefe ist hierbei ein derartiger vorgegebener horizontaler Abstand des Gabelträgers 25 von der vorderen horizontalen Regaltraverse RT, dass die Last L nach dem Absenken auf der vorderen horizontalen Regaltraverse RT und der hinteren horizontalen Regaltraverse RTH des Regals R aufsteht und zu der Last L in dem hinter dem Regalfach RF befindlichen Regalfach RFH einen Abstand aufweist.

Erfindungsgemäß wird somit der horizontale Abstand vom Gabelträger 25 der Schubvorrichtung 15 bis zu dem Bezugspunkt BP des Einlagerungsplatzes EP, beispielsweise der vorderen horizontalen Regaltraverse RT des Regals R, mit der Sensoreinrichtung 31 gemessen und diese Information zur Regulierung der Ausschubtiefe der Last L genutzt. Durch den Messwert ist es möglich, unabhängig davon, wie weit das Hubgerüst 4 seitlich ausgebogen ist, die Last L gleichmäßig in das Regal R einzulagern.

Die Regelungsvorrichtung 30, die den Abstands-Messwert der Sensoreinrichtung 31 erhält und verarbeitet, gleicht beispielsweise den Abstands-Messwert mit der vorgegebenen, beispielsweise einer voreingestellten, Einlagerungstiefe ab und errechnet den erforderlichen Ausschubweg des Lastaufnahmemittels 6 in Fahrzeugquerrichtung Q. Anschließend wird der Ausschubweg des Lastaufnahmemittels 6 auf diesen errechneten Ausschubweg begrenzt bzw. sichergestellt, dass das Absetzen der Last L in dem Regalfach RF nicht vor Erreichen des ermittelten Ausschubweges durchgeführt wird.

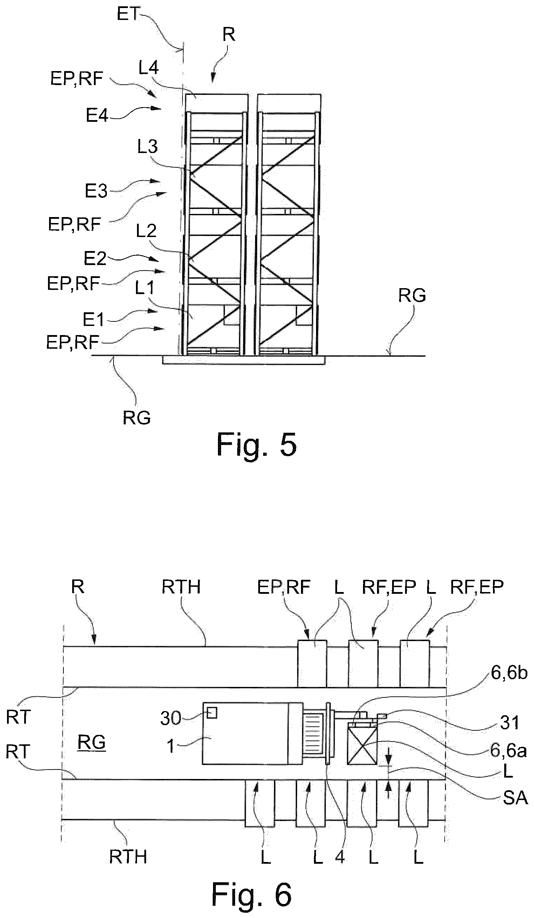

In der Figur 5 ist ein Regal R, beispielsweise ein Schnitt entlang der Linien A-A der Figur 4, mit mehreren als Regalfächern RF ausgebildeten Einlagerungsplätzen EP in mehreren übereinander angeordneten Regalebenen E1 bis E4 dargestellt, in die jeweils eine Last L1 bis L4 in erfindungsgemäßer Weise eingelagert wurde. Die Lasten L1 bis L4 sind jeweils auf die vorgegebene Einlagerungstiefe ET in die entsprechenden Regalfächer RF eingelagert, so dass die Lasten L1 bis L4 eine einheitliche und gleichmäßige Einlagerungstiefe ET aufweisen.

In der Figur 6 ist eine Draufsicht auf ein Regal R mit einem in einem Regalgang RG befindlichen erfindungsgemäßen Flurförderzeug 1 dargestellt, wobei die Lasten L jeweils auf die vorgegebene Einlagerungstiefe in die entsprechenden als Regalfächer RF ausgebildeten Einlagerungsplätzen EP eingelagert sind, so dass die Lasten L eine einheitliche und gleichmäßige Einlagerungstiefe ET aufweisen. Sofern mit dem Flurförderzeug 1 - wie in der Figur 6 dargestellt ist - ein derart eingelagerte Last L wieder aus dem Regalfach RF ausgelagert wird, kann aufgrund der vorgegebenen Einlagerungstiefe der Last L in dem Regalfach RF das Lastaufnahmemittel 6 beim Auslagern der Last L derart in Fahrzeugquerrichtung Q verschoben werden, dass die auszulagernde Last L vor dem Anheben an dem Gabelrücken der Gabelzinken 6a, 6b anliegt. In der zurückgezogenen Stellung des Lastaufnahmemittels 6, die in der Figur 6 dargestellt ist, kann somit ein Sicherheitsabstand SA zwischen der auf dem Lastaufnahmemittel 6 befindlichen Last L und den in dem Regal R befindlichen Lasten L erzielt werden, so dass bei der Fahrt des Flurförderzeugs 1 entlang des Regalgangs RG Kollisionen der auf dem Lastaufnahmemittel 6 befindlichen Last L mit den in den Regalfächer RF des Regals R befindlichen Lasten L vermieden werden.

Die Erfindung ist nicht auf das dargestellte Ausführungsbeispiels eines Flurförderzeugs 1 beschränkt, das einen anhebbaren Fahrerstand 5 aufweist. Alternativ kann das Flurförderzeug 1 ein Fahrerarbeitsplatz am Fahrzeugrahmen 2 aufweisen, wobei die mit dem Lastaufnahmemittel 6 versehene Schubvorrichtung 15 direkt an dem Hubgerüst 4 anhebbar und absenkbar angeordnet ist.

Weiterhin ist die Erfindung nicht auf das dargestellte Ausführungsbeispiels des Flurförderzeugs 1 mit einer als Schwenkschubgabel ausgebildeten Schubvorrichtung 15 beschränkt. Alternativ kann die Schubvorrichtung 15 von einer in Fahrzeugquerrichtung Q verschiebbar angeordneten Teleskopgabel gebildet werden, mit der als Bewegung des Lastaufnahmemittels 6 nur eine horizontale Schubbewegung in Fahrzeugquerrichtung Q erzeugbar ist.

Weiterhin ist die Erfindung nicht auf die Ausführung des Einlagerungsplatzes EP als Regalfach RF eines Regals R beschränkt. Alternativ kann der Einlagerungsplatz EP als Übergabestation, beispielsweise als Rollenbahn, ausgebildet sein, bei der der Bezugspunkt für die Abstandsmessung der Sensoreinrichtung 31 an einer dem Flurförderzeug zugewandten Seite der Übergabestation ausgebildet ist.

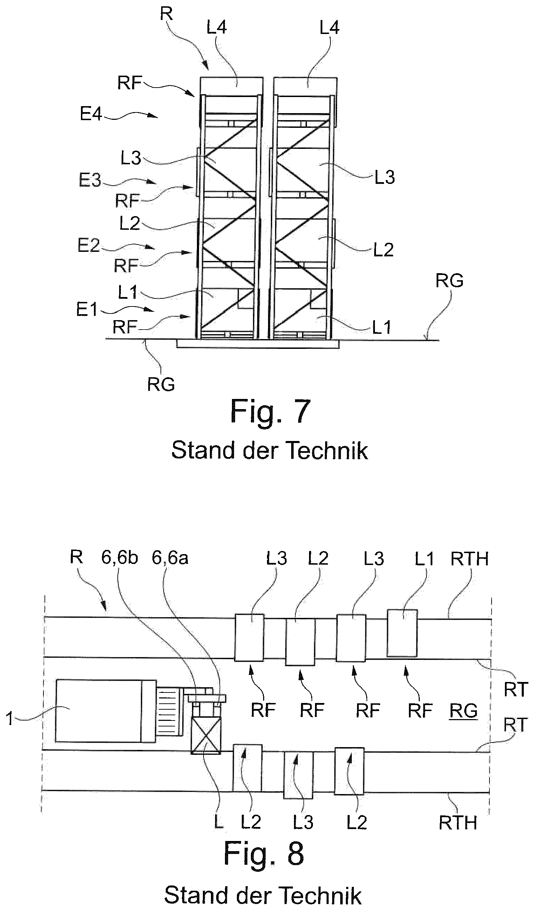

In der Figur 7 ist ein Regal R mit mehreren Regalfächern RF in mehreren übereinander angeordneten Regalebenen E1 bis E4 dargestellt, in die jeweils eine Last L1 bis L4 nach dem Stand der Technik eingelagert wurde, beispielsweise durch eine manuelle Steuerung der die Ausschubbewegung des Lastaufnahmemittels 6 in horizontaler Fahrzeugquerrichtung Q erzeugenden Schubvorrichtung 15. Die Lasten L1 bis L4 weisen unterschiedliche Einlagerungstiefen und eine nicht gleichmäßige Einlagerungstiefe auf. Hierbei ist ersichtlich, dass die Last L3 in dem linken Regal R und die Lasten L2, L4 in dem rechten Regal R eine zu geringe Einlagerungstiefe aufweisen und in den entsprechenden Regalgang RG herausstehen.

Wird im Stand der Technik eine zu tief in das Regalfach RF eingelagerte Last L wieder ausgelagert, kann eine Situation auftreten, die in der Figur 8 dargestellt ist, in der eine Draufsicht auf ein Regal R mit einem in einem Regalgang RG befindlichen Flurförderzeug 1 dargestellt ist, wobei die Lasten L unterschiedliche Einlagerungstiefen und eine nicht gleichmäßige Einlagerungstiefe in den entsprechenden Regalfächer RF aufweisen. In der Figur 8 ist eine Situation dargestellt, in der die Last L1 zu tief eingelagert ist, die Lasten L2 eine zu geringe Einlagerungstiefe haben und die Lasten L3 eine korrekte Einlagerungstiefe aufweisen. Wird eine zu tief in das Regalfach RF eingelagerte Last L1 wieder mit dem Flurförderzeug 1 aus dem Regalfach RF ausgelagert, liegt die ausgelagerte Last L nicht am Gabelrücken der Gabelzinken 6a, 6b an, wie in der Darstellung der Figur 8 verdeutlicht ist. In der zurückgezogenen Stellung des Lastaufnahmemittels 6, die in der Figur 8 dargestellt ist, kann sich hierbei die mit dem Lastaufnahmemittel L aufgenommene Last L noch teilweise in dem Regalfach RF befinden oder zwar soweit aus dem Regalfach RF herausgezogen sein, dass bei der Fahrt des Flurförderzeugs 1 entlang des Regalgangs RG Kollisionen der auf dem Lastaufnahmemittel 6 befindlichen Last L mit den in den Regalfächer RF des Regals R befindlichen Lasten L2 auftreten, insbesondere wenn eine in einem Regalfach RF eingelagerte Last L2 aufgrund einer zu geringen Einlagerungstiefe aus dem Regalfach RF in den Regalgang RG heraussteht.

## Patentansprüche

1. Flurförderzeug (1) mit einem Hubgerüst (4), einem Lastaufnahmemittel (6) zur Aufnahme einer Last (L) und einer Schubvorrichtung (15) für das Lastaufnahmemittel (6), wobei die Schubvorrichtung (15) gemeinsam mit dem Lastaufnahmemittel (6) an dem Hubgerüst (4) anhebbar und absenkbar ist und wobei die Schubvorrichtung (15) ausgebildet ist, das Lastaufnahmemittel (6) relativ zu dem Hubgerüst (4) in horizontaler Fahrzeugquerrichtung (Q) des Flurförderzeugs (1) zu verschieben, wobei eine Regelungsvorrichtung (30), insbesondere eine elektronische Regelungsvorrichtung (30), vorgesehen ist, die mit einer Sensoreinrichtung (31) in Wirkverbindung steht, **dadurch gekennzeichnet, dass** die Sensoreinrichtung (31) ausgebildet ist, einen horizontalen Abstand in Fahrzeugquerrichtung (Q) von der Schubvorrichtung (15) zu einem Bezugspunkt (BP) eines Einlagerungsplatzes (EP) zu messen, und die Regelungsvorrichtung (30) die Schubvorrichtung (15) in Abhängigkeit von dem mittels der Sensoreinrichtung (31) erfassten Abstand derart ansteuert, dass beim Einlagern einer auf dem Lastaufnahmemittel (6) befindlichen Last (L) in den Einlagerungsplatz (EP) eine vorgegebene Einlagerungstiefe (ET) der Last (L) in den Einlagerungsplatz (EP) erzielt wird.

2. Flurförderzeug nach Anspruch 1, **dadurch gekennzeichnet, dass** die Regelungsvorrichtung (30) die Schubvorrichtung (15) derart ansteuert, dass die Bewegung des Lastaufnahmemittels (6) bei Erreichen der vorgegebenen Einlagerungstiefe (ET) gestoppt wird.

3. Flurförderzeug nach Anspruch 1 oder 2, **dadurch gekennzeichnet, dass** der Bezugspunkt (BP) an einem mindestens ein Regalfach (RF) als Einlagerungsplatz (EP) aufweisenden Regal (R), insbesondere an einer horizontalen Regaltraverse (RT) des Regals (R) und/oder an einem vertikalen Ständer des Regals (R), ausgebildet ist, und die Regelungsvorrichtung (30) die Schubvorrichtung (15) in Abhängigkeit von dem mittels der Sensoreinrichtung (31) erfassten Abstand derart ansteuert, dass beim Einlagern einer auf dem Lastaufnahmemittel (6) befindlichen Last (L) in das Regalfach (RF) des Regals (R) eine vorgegebene Einlagerungstiefe (ET) der Last (L) in das Regalfach (RF) erzielt wird.

4. Flurförderzeug nach Anspruch 1 oder 2, **dadurch gekennzeichnet, dass** der Bezugspunkt an einer als Einlagerungsplatz ausgebildeten Übergabestation, insbesondere einer Rollenbahn, ausgebildet ist.

5. Flurförderzeug nach einem der Ansprüche 1 bis 4, **dadurch gekennzeichnet, dass** das Lastaufnahmemittel (6) einen Gabelträger (25) umfasst, an dem mindestens eine Gabelzinke (6a; 6b) angeordnet ist.

6. Flurförderzeug nach Anspruch 5, **dadurch gekennzeichnet, dass** die Sensoreinrichtung (31) ausgebildet ist, den Abstand des Gabelträgers (25) zu dem Bezugspunkt (BP) des Einlagerungsplatzes (EP) zu messen.

7. Flurförderzeug nach einem der Ansprüche 1 bis 4, **dadurch gekennzeichnet, dass** das Lastaufnahmemittel (6) eine Teleskopgabel mit einem Teleskopgabeltisch umfasst, an dem mindestens eine Teleskopzinke angeordnet ist.

8. Flurförderzeug nach Anspruch 7, **dadurch gekennzeichnet, dass** die Sensoreinrichtung (31) ausgebildet ist, den Abstand des Teleskopgabeltisches zu dem Bezugspunkt (BP) des Einlagerungsplatzes (EP) zu messen.

9. Flurförderzeug nach einem der Ansprüche 1 bis 8, **dadurch gekennzeichnet, dass** die Sensoreinrichtung (31) als optisches Sensorsystem, insbesondere Lasersensor, oder als akustisches Sensorsystem ausgebildet ist.

10. System umfassend ein Flurförderzeug (1) nach einem der vorangegangenen Ansprüche und mindestens einen Einlagerungsplatz (EP), insbesondere eine Übergabestation oder ein Regal (R), das horizontale Regaltraversen (RT) und vertikale Ständer aufweist.

11. Verfahren zum Einlagern einer Last (L) in einen Einlagerungsplatz mit einem Flurförderzeug (1), wobei das Flurförderzeug (1) mit einem Hubgerüst (4), einem Lastaufnahmemittel (6) zur Aufnahme einer Last (L) und einer Schubvorrichtung (15) für das Lastaufnahmemittel (6) versehen ist, wobei die Schubvorrichtung (15) gemeinsam mit dem Lastaufnahmemittel (6) an dem Hubgerüst (4) anhebbar und absenkbar ist und das Lastaufnahmemittel (6) mittels der Schubvorrichtung (15) zum Einlagern der Last (L) in den Einlagerungsplatz relativ zu dem Hubgerüst (4) in horizontaler Fahrzeugquerrichtung (Q) des Flurförderzeugs (1) verschoben wird, **dadurch gekennzeichnet, dass** mit einer Sensoreinrichtung (31) ein horizontaler Abstand in Fahrzeugquerrichtung (Q) von der Schubvorrichtung (15) zu einem Bezugspunkt (BP) des Einlagerungsplatzes (EP) gemessen wird und die Schubvorrichtung (15) in Abhängigkeit von dem mittels der Sensoreinrichtung (31) erfassten Abstand derart angesteuert wird, dass beim Einlagern einer auf dem Lastaufnahmemittel (6) befindlichen Last (L) in den Einlagerungsplatz (EP) eine vorgegebene Einlagerungstiefe (ET) der Last (L) in den Einlagerungsplatz (EP) erzielt wird.

12. Verfahren nach Anspruch 11, **dadurch gekennzeichnet, dass** als Bezugspunkt (BP) des Einlagerungsplatzes (EP) ein Bezugspunkt an einem mindestens ein Regalfach (RF) als Einlagerungsplatz (EP) aufweisenden Regal (R), insbesondere an einer horizontalen Regaltraverse (RT) des Regals (R) und/oder an einem vertikalen Ständer des Regals (R), verwendet wird, und die Schubvorrichtung (15) in Abhängigkeit von dem mittels der Sensoreinrichtung (31) erfassten Abstand derart angesteuert wird, dass beim Einlagern einer auf dem Lastaufnahmemittel (6) befindlichen Last (L) in das Regalfach (RF) des Regals (R) eine vorgegebene Einlagerungstiefe (ET) der Last (L) in das Regalfach (RF) erzielt wird.

13. Verfahren nach Anspruch 11, dass als Bezugspunkt des Einlagerungsplatzes ein Bezugspunkt an einer als Einlagerungsplatz ausgebildeten Übergabestation, insbesondere einer Rollenbahn, verwendet wird.

14. Verfahren nach einem der Ansprüche 11 bis 13, **dadurch gekennzeichnet, dass** die Schubvorrichtung (15) einen Gabelträger (25) umfasst, an dem mindestes eine Gabelzinke (6a; 6b) angeordnet ist, wobei von der Sensoreinrichtung (31) der Abstand des Gabelträgers (25) zu dem Bezugspunkt (BP) des Einlagerungsplatzes (EP) gemessen wird.

15. Verfahren nach einem der Ansprüche 11 bis 13, **dadurch gekennzeichnet, dass** die Schubvorrichtung (15) eine Teleskopgabel mit einem Teleskopgabeltisch umfasst, an dem mindestens eine Teleskopzinke angeordnet ist, wobei von der Sensoreinrichtung (31) der Abstand des Teleskopgabeltisches zu dem Bezugspunkt (BP) des Einlagerungsplatzes (EP) gemessen wird.

## Claims

1. Industrial truck (1) having a lifting frame (4), a load-carrying means (6) for carrying a load (L) and an advancing device (15) for the load-carrying means (6), wherein the advancing device (15) can be lifted and lowered on the lifting frame (4) together with the load-carrying means (6) and wherein the advancing device (15) is designed to move the load-carrying means (6) relative to the lifting frame (4) in the horizontal truck transverse direction (Q) of the industrial truck (1), wherein a control device (30), in particular an electronic control device (30), is provided, which control device is in operative connection with a sensor apparatus (31), **characterized in that** the sensor apparatus (31) is designed to measure a horizontal distance in the truck transverse direction (Q) between the advancing device (15) and a reference point (BP) of a storage location (EP), and the control device (30) actuates the advancing device (15) depending on the distance detected by means of the sensor apparatus (31) in such a way that, when a load (L) located on the load-carrying means (6) is stored in the storage location (EP), a predefined storage depth (ET) of the load (L) in the storage location (EP) is achieved.

2. Industrial truck according to Claim 1, **characterized in that** the control device (30) actuates the advancing device (15) in such a way that the movement of the load-carrying means (6) is stopped when the predefined storage depth (ET) is reached.

3. Industrial truck according to Claim 1 or 2, **characterized in that** the reference point (BP) is formed on a shelf (R) having at least one shelf compartment (RF) as the storage location (EP), in particular on a horizontal shelf crossbeam (RT) of the shelf (R) and/or on a vertical rack of the shelf (R), and the control device (30) actuates the advancing device (15) depending on the distance detected by means of the sensor apparatus (31) in such a way that, when a load (L) located on the load-carrying means (6) is stored in the shelf compartment (RF) of the shelf (R), a predefined storage depth (ET) of the load (L) in the shelf compartment (RF) is achieved.

4. Industrial truck according to Claim 1 or 2, **characterized in that** the reference point is formed at a transfer station designed as the storage location, in particular a roller track.

5. Industrial truck according to any one of Claims 1 to 4, **characterized in that** the load-carrying means (6) comprises a fork carriage (25) on which at least one fork tine (6a; 6b) is arranged.

6. Industrial truck according to Claim 5, **characterized in that** the sensor apparatus (31) is designed to measure the distance between the fork carriage (25) and the reference point (BP) of the storage location (EP).

7. Industrial truck according to any one of Claims 1 to 4, **characterized in that** the load-carrying means (6) comprises a telescopic fork having a telescopic fork table on which at least one telescopic tine is arranged.

8. Industrial truck according to Claim 7, **characterized in that** the sensor apparatus (31) is designed to measure the distance between the telescopic fork table and the reference point (BP) of the storage location (EP).

9. Industrial truck according to any one of Claims 1 to 8, **characterized in that** the sensor apparatus (31) is designed as an optical sensor system, in particular a laser sensor, or as an acoustic sensor system.

10. System comprising an industrial truck (1) according to any one of the preceding claims and at least one storage location (EP), in particular a transfer station or a shelf (R) having horizontal shelf crossbeams (RT) and vertical racks.

11. Method for storing a load (L) in a storage location using an industrial truck (1), wherein the industrial truck (1) is provided with a lifting frame (4), a load-carrying means (6) for carrying a load (L) and an advancing device (15) for the load-carrying means (6), wherein the advancing device (15) can be lifted and lowered on the lifting frame (4) together with the load-carrying means (6) and, to store the load (L) in the storage location, the load-carrying means (6) is moved by means of the advancing device (15) relative to the lifting frame (4) in the horizontal truck transverse direction (Q) of the industrial truck (1), **characterized in that** a horizontal distance in the truck transverse direction (Q) between the advancing device (15) and a reference point (BP) of the storage location (EP) is measured using a sensor apparatus (31) and the advancing device (15) is actuated depending on the distance detected by means of the sensor apparatus (31) in such a way that, when a load (L) located on the load-carrying means (6) is stored in the storage location (EP), a predefined storage depth (ET) of the load (L) in the storage location (EP) is achieved.

12. Method according to Claim 11, **characterized in that** the reference point (BP) of the storage location (EP) used is a reference point on a shelf (R) having at least one shelf compartment (RF) as the storage location (EP), in particular on a horizontal shelf crossbeam (RT) of the shelf (R) and/or on a vertical rack of the shelf (R), and the advancing device (15) is actuated depending on the distance detected by means of the sensor apparatus (31) in such a way that, when a load (L) located on the load-carrying means (6) is stored in the shelf compartment (RF) of the shelf (R), a predefined storage depth (ET) of the load (L) in the shelf compartment (RF) is achieved.

13. Method according to Claim 11, in that the reference point of the storage location used is a reference point at a transfer station designed as a storage location, in particular a roller track.

14. Method according to any one of Claims 11 to 13, **characterized in that** the advancing device (15) comprises a fork carriage (25) on which at least one fork tine (6a; 6b) is arranged, wherein the distance between the fork carriage (25) and the reference point (BP) of the storage location (EP) is measured by the sensor apparatus (31).

15. Method according to any one of Claims 11 to 13, **characterized in that** the advancing device (15) comprises a telescopic fork having a telescopic fork table on which at least one telescopic tine is arranged, wherein the distance between the telescopic fork table and the reference point (BP) of the storage location (EP) is measured by the sensor apparatus (31).

## Revendications

1. Chariot de manutention (1) comprenant un mât de levage (4), un moyen de réception de charge (6) destiné à recevoir une charge (L) et un dispositif de poussée (15) pour le moyen de réception de charge (6), le dispositif de poussée (15) pouvant être levé et abaissé conjointement avec le moyen de réception de charge (6) sur le mât de levage (4) et le dispositif de poussée (15) étant configuré pour déplacer le moyen de réception de charge (6) par rapport au mât de levage (4) dans la direction transversale de véhicule (Q) horizontale du chariot de manutention (1), un dispositif de régulation (30), notamment un dispositif de régulation électronique (30), étant prévu, qui est en liaison active avec un appareil capteur (31), **caractérisé en ce que** l'appareil capteur (31) est configuré pour mesurer une distance horizontale dans la direction transversale de véhicule (Q) entre le dispositif de poussée (15) et un point de référence (BP) d'un emplacement d'entreposage (EP), et le dispositif de régulation (30) commande le dispositif de poussée (15) en fonction de la distance détectée au moyen de l'appareil capteur (31) de telle sorte que, lors de l'entreposage d'une charge (L) qui se trouve sur le moyen de réception de charge (6) dans l'emplacement d'entreposage (EP), une profondeur d'entreposage (ET) prédéfinie de la charge (L) dans l'emplacement d'entreposage (EP) soit atteinte.

2. Chariot de manutention selon la revendication 1, **caractérisé en ce que** le dispositif de régulation (30) commande le dispositif de poussée (15) de telle sorte que le mouvement du moyen de réception de charge (6) soit arrêté lorsque la profondeur d'entreposage (ET) prédéfinie est atteinte.

3. Chariot de manutention selon la revendication 1 ou 2, **caractérisé en ce que** le point de référence (BP) est formé sur un rayonnage (R) qui possède au moins un casier (RF) en tant qu'emplacement d'entreposage (EP), notamment sur une traverse de rayonnage (RT) horizontale du rayonnage (R) et/ou sur un montant vertical du rayonnage (R), et le dispositif de régulation (30) commande le dispositif de poussée (15) en fonction de la distance détectée par l'appareil capteur (31) de telle sorte que, lors de l'entreposage d'une charge (L) qui se trouve sur le moyen de réception de charge (6) dans le casier (RF) du rayonnage (R), une profondeur d'entreposage (ET) prédéfinie de la charge (L) dans le casier (RF) du rayonnage soit atteinte.

4. Chariot de manutention selon la revendication 1 ou 2, **caractérisé en ce que** le point de référence est réalisé sous la forme d'un poste de transfert, notamment un convoyeur à rouleaux, configuré comme un emplacement d'entreposage.

5. Chariot de manutention selon l'une des revendications 1 à 4, **caractérisé en ce que** le moyen de réception de charge (6) comprend un porte-fourches (25) sur lequel est disposé au moins un bras de fourche (6a ; 6b).

6. Chariot de manutention selon la revendication 5, **caractérisé en ce que** l'appareil capteur (31) est configuré pour mesurer la distance entre le porte-fourches (25) et le point de référence (BP) de l'emplacement d'entreposage (EP).

7. Chariot de manutention selon l'une des revendications 1 à 4, **caractérisé en ce que** le moyen de réception de charge (6) comprend une fourche télescopique pourvue d'une table de fourche télescopique sur laquelle est disposé au moins un bras télescopique.

8. Chariot de manutention selon la revendication 7, **caractérisé en ce que** l'appareil capteur (31) est configuré pour mesurer la distance entre la table de fourche télescopique et le point de référence (BP) de l'emplacement d'entreposage (EP).

9. Chariot de manutention selon l'une des revendications 1 à 8, **caractérisé en ce que** l'appareil capteur (31) est réalisé sous la forme d'un système capteur optique, notamment un capteur laser, ou sous la forme d'un système capteur acoustique.

10. Système comprenant un chariot de manutention (1) selon l'une des revendications précédentes et au moins un emplacement de stockage (EP), notamment un poste de transfert ou un rayonnage (R) qui possède des traverses de rayonnage (RT) horizontales et des montants verticaux.

11. Procédé d'entreposage d'une charge (L) dans un emplacement d'entreposage à l'aide d'un chariot de manutention (1), le chariot de manutention (1) étant muni d'un mât de levage (4), d'un moyen de réception de charge (6) destiné à recevoir une charge (L) et d'un dispositif de poussée (15) pour le moyen de réception de charge (6), le dispositif de poussée (15) pouvant être levé et abaissé conjointement avec le moyen de réception de charge (6) sur le mât de levage (4) et le moyen de réception de charge (6) étant déplacé au moyen du dispositif de poussée (15) par rapport au mât de levage (4) dans la direction transversale de véhicule (Q) horizontale du chariot de manutention (1) en vue d'entreposer la charge (L) dans l'emplacement d'entreposage, **caractérisé en ce qu'**un appareil capteur (31) mesure une distance horizontale dans la direction transversale de véhicule (Q) du véhicule entre le dispositif de poussée (15) et un point de référence (BP) de l'emplacement d'entreposage (EP) et que le dispositif de poussée (15) est commandé en fonction de la distance détectée par l'appareil capteur (31) de telle sorte que, lors de l'entreposage d'une charge (L) qui se trouve sur le moyen de réception de charge (6) dans l'emplacement d'entreposage (EP), une profondeur d'entreposage (ET) prédéfinie de la charge (L) dans l'emplacement d'entreposage (EP) soit atteinte.

12. Procédé selon la revendication 11, **caractérisé en ce qu'**un point de référence sur un rayonnage (R) qui possède au moins un casier (RF) en tant qu'emplacement d'entreposage (EP), notamment sur une traverse de rayonnage (RT) horizontale du rayonnage (R) et/ou sur un montant vertical du rayonnage (R), est utilisé comme point de référence (BP) de l'emplacement d'entreposage (EP), et le dispositif de poussée (15) est commandé en fonction de la distance détectée au moyen de l'appareil capteur (31) de telle sorte que, lors de l'entreposage d'une charge (L) qui se trouve sur le moyen de réception de charge (6) dans le casier (RF) du rayonnage (R), une profondeur d'entreposage (ET) prédéfinie de la charge (L) dans le casier (RF) du rayonnage soit atteinte.

13. Procédé selon la revendication 11, en ce que le point de référence utilisé de l'emplacement d'entreposage est un point de référence au niveau d'un poste de transfert, notamment un convoyeur à rouleaux, configuré comme un emplacement d'entreposage.

14. Procédé selon l'une des revendications 11 à 13, **caractérisé en ce que** le dispositif de poussée (15) comprend un porte-fourche (25) sur lequel est disposé au moins un bras de fourche (6a ; 6b), la distance entre le porte-fourche (25) et le point de référence (BP) de l'emplacement d'entreposage (EP) étant mesurée par l'appareil capteur (31).

15. Procédé selon l'une des revendications 11 à 13, **caractérisé en ce que** le dispositif de poussée (15) comporte une fourche télescopique pourvue d'une table de fourche télescopique sur laquelle est disposé au moins un bras télescopique, la distance entre la table de fourche télescopique et le point de référence (BP) de l'emplacement d'entreposage (EP) étant mesurée par l'appareil capteur (31).
